# EUROPÄISCHE PATENTSCHRIFT

(11) **EP 2 573 386 B1**
(45) Veröffentlichungstag und Bekanntmachung des Hinweises auf die Patenterteilung: **29.10.2014**
(21) Anmeldenummer: 11182708.5
(22) Anmeldetag: 26.09.2011
(51) Int. Cl.: H02K 7/116, H02K 7/18, F03D 11/02, F03D 11/04, F16H 1/28, F16H 57/021, F16H 57/02

(54) **Antriebssystem für eine Windkraftanlage**
Drive system for a wind turbine
Système de transmission pour une éolienne

(43) Veröffentlichungstag der Anmeldung: 27.03.2013
(73) Patentinhaber: Siemens Aktiengesellschaft, 80333 München (DE)
(72) Erfinder: Böing, Alfons, 46395 Bocholt (DE); Dinter, Ralf Martin, 45888 Gelsenkirchen (DE); Draber, Jürgen, 94036 Passau (DE); Klein-Hitpass, Arno, 52074 Aachen (DE); Kretschmann, Frank, 45701 Herten (DE); Reimers, Jan-Dirk, 52074 Aachen (DE); Schöberl, Friedrich, 94099 Ruhstorf a.d. Rott (DE); Zeichfüßl, Roland, 94575 Windorf / Rathsmannsdorf (DE)

(56) Entgegenhaltungen:
- EP-A2- 2 031 273
- WO-A1-2006/053940
- CN-Y- 201 367 991

## Beschreibung

Ein Großmaschinenantriebstrang für Windkraftanlagen oder Mühlen umfaßt üblicherweise Systemkomponenten, wie Netzanbindungselemente, Motoren bzw. Generatoren, Kupplungen, Getriebe und Antriebswellen. Netzseitig sind vielfach Umrichter vorgesehen. Bremsen sind oft in Form von mechanischen Bremsen an schnellaufenden Wellen zwischen Getriebe und Motor bzw. Generator vorgesehen, da dort Bremsmomente übersetzungsbedingt kleiner sind.

Aus der älteren europäischen Patentanmeldung mit dem Anmeldeaktenzeichen 11172108.0 ist ein Antriebssystem bekannt, das eine zumindest eine Planetenradstufe umfassende Getriebeeinheit aufweist. Dabei weist die Planetenradstufe ein Hohlrad, mehrere Planetenräder, einen Planetenträger und ein Sonnenrad auf. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Die Getriebeeinheit und eine mit einer zweiten Welle der Getriebeeinheit verbundene Motor- oder Generatoreinheit sind von einem Getriebegehäuse umgeben. Außerdem umfaßt die Motor- oder Generatoreinheit einen drehfest mit einer Rotorhohlwelle verbundenen Rotor. Zwischen der Rotorhohlwelle und der zweiten Welle der Getriebeeinheit ist erfindungsgemäß eine elektrisch isolierende, lösbare Flanschverbindung angeordnet, deren getriebeseitiges Ende mit einer Getriebehohlwelle verbunden ist. Zwischen Getriebeeinheit und Motor- oder Generatoreinheit ist ein Getriebegehäusestutzen angeordnet, der einen getriebeseitigen Endabschnitt der Getriebehohlwelle konzentrisch umgibt und einen Lagersitz für eine der zweiten Welle der Getriebeeinheit zugeordnete Lageranordnung bildet.

In der älteren europäischen Patentanmeldung mit dem Anmeldeaktenzeichen 11002782.8 ist ein Antriebssystem für eine Windkraftanlage beschrieben, das eine zumindest eine Planetenradstufe umfassende Getriebeeinheit aufweist. Dabei weist die Planetenradstufe ein Hohlrad, mehrere Planetenräder, einen Planetenträger und ein Sonnenrad auf. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Die Getriebeeinheit und eine mit einer zweiten Welle der Getriebeeinheit verbundene Motor- oder Generatoreinheit sind von einem Getriebegehäuse umgeben, das eine kardanische umfangssymmetrische oder teilsymmetrische Aufhängung zur Verbindung mit einem tragenden Strukturelement der Windkraftanlage aufweist.

EP 1 045 139 A2 offenbart eine Windkraftanlage mit einem Rotor, dessen Rotornabe in einem auf einem Rotorträger angeordneten Wälzlager gelagert und mit einem zweistufigen, eine Antriebsstufe und eine Abtriebsstufe aufweisenden Planetengetriebe verbunden ist. Eine Ausgangswelle der Planetenstufe ist über eine Kupplung an einen Generator gekoppelt. Ein Innenring des Wälzlagers ist mit der Rotornabe und rotierenden Teilen des Planetengetriebes lösbar verbunden. Darüber hinaus ist ein Gehäuse des Generators mit dem Planetengetriebe lösbar zu einem Triebstrangmodul verbunden. Das Triebstrangmodul ist auf dem Rotorträger abgestützt und dadurch dynamisch entkoppelt.

Aus EP 2 031 273 A2 ist eine Generator-Getriebe-Einheit bekannt, bei der ein Rotor des Generators mittels einer zwischen einer inneren Rotorhohlwelle und einem Gehäusestutzen vorgesehenen Lageranordnung gelagert ist. Spulen- bzw. Magnetanordnungen des Rotors umgeben den Gehäusestutzen radial. Zwischen der inneren Rotorhohlwelle und einer Sonnenwelle ist eine Kupplung vorgesehen. Die Sonnenwelle verfügt über keine eigenen Lager, sondern ist über die Lageranordnung des Rotors gelagert.

In EP 2 295 147 A1 ist ein Mühlenantriebssystem mit einem unterhalb eines Mahltellers anordenbaren Getriebe mit zumindest einer Planeten- bzw. Stirnradstufe sowie einem in ein Gehäuse des Getriebes integrierten elektrischen Motor beschrieben. Außerdem umfaßt das Mühlenantriebssystem einen Umrichter mit einer zugeordneten Regelungseinrichtung zur verzahnungsspielfreien Drehzahlregelung des Motors.

WO 2008/031694 A1 offenbart ein Mühlenantriebssystem mit einem unterhalb eines Mahltellers anordenbaren Getriebe. Das Getriebe umfaßt zumindest eine Planetenstufe und weist eine vertikale Wellenlage auf. In ein Gehäuse des Getriebes ist ein elektrischer Motor integriert, der an einen Schmierstoffversorgungskreislauf des Getriebes angeschlossen ist, dessen Rotor und Stator sich vertikal erstreckende Achsen aufweisen und dessen Kühlung mittels durch das Getriebe zirkulierenden Schmierstoffs erfolgt.

Der vorliegenden Erfindung liegt die Aufgabe zugrunde, ein Antriebssystem für eine Windkraftanlage anzugeben, das auch bei separaten Lagern für Getriebeeinheit und Motor- oder Generatoreinheit eine kompakte Bauweise ermöglicht.

Diese Aufgabe wird erfindungsgemäß durch ein Antriebssystem mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Antriebssystem umfaßt eine Getriebeeinheit mit zumindest einer Planetenradstufe, die ein Hohlrad, mehrere Planetenräder, einen Planetenträger und ein Sonnenrad aufweist. Außerdem ist der Getriebeeinheit eine erste Welle zugeordnet, die einen mit einer Arbeitsmaschinen- oder Rotorwelle verbindbaren Kupplungsflansch aufweist und über den Planetenträger gelagert ist. Mit der Getriebeeinheit ist eine Motor- oder Generatoreinheit verbunden. Darüber hinaus ist der Getriebeeinheit eine als Hohlwelle ausgestaltete zweite Welle zugeordnet, die mit ihrem getriebeseitigen Endabschnitt einen motor- oder generatorseitigen Endabschnitt einer Sonnenradwelle konzentrisch umgibt und dort mit dieser drehfest verbunden ist. Ein Rotor der Motor- oder Generatoreinheit ist drehfest mit einer Rotorhohlwelle verbunden. Mit der Rotorhohlwelle ist außerdem eine Steckwelle drehfest verbunden, die mit ihrem getriebeseitigen Endabschnitt von der zweiten Welle der Getriebeeinheit konzentrisch umgeben und dort mit dieser drehfest verbunden ist. Zwischen Getriebeeinheit und Motor- oder Generatoreinheit ist ein Getriebegehäusestutzen angeordnet, der die zweite Welle der Getriebeeinheit konzentrisch umgibt und einen Lagersitz für eine der zweiten Welle zugeordnete Lageranordnung bildet, mittels derer auch die Sonnenradwelle gelagert ist. Zwei jeweils an einer Motor- oder Generatorstirnseite angeordnete Gehäusedeckel bilden Lagersitze für ein erstes und ein zweites Lager der Rotorhohlwelle bilden.

Die konzentrisch innerhalb von zweiter Welle der Getriebeeinheit und Rotorhohlwelle angeordnete Steckwelle ermöglicht eine kompakte Bauweise bei eigenständiger Lagerung der Motor- oder Generatoreinheit. Aufgrund dessen kann die Motor- oder Generatoreinheit autark betrieben werden.

Eine besonders kompakte Bauweise ergibt sich, wenn die zweite Welle der Getriebeeinheit entsprechend einer vorteilhaften Weiterbildung der vorliegenden Erfindung mit der Sonnenradwelle über eine innerhalb der zweiten Welle angeordnete Kupplung oder Spannverbindung verbunden ist. In entsprechender Weise kann die zweite Welle der Getriebeeinheit mit der Steckwelle über eine innerhalb der zweiten Welle angeordnete Kupplung oder Spannverbindung verbunden sein. Auch die Rotorhohlwelle kann mit der Steckwelle in vorteilhafter Weise an einem getriebeseitigen Ende der Rotorhohlwelle über eine innerhalb der Rotorhohlwelle angeordnete Kupplung oder Spannverbindung verbunden sein.

Entsprechend einer vorteilhaften Weiterbildung der vorliegenden Erfindung erstreckt sich die Steckwelle axial komplett über die Rotorhohlwelle und ist an einer von der Getriebeeinheit abgewandten Stirnseite der Motor- oder Generatoreinheit mit der Rotorhohlwelle mittels einer Kupplung oder Spannverbindung verbunden. Dies ermöglicht, die Motor- oder Generatoreinheit von äußeren Axiallasten wirksam zu entkoppeln.

Die Rotorhohlwelle kann darüber hinaus an einer von der Getriebeeinheit abgewandten Stirnseite der Motor- oder Generatoreinheit drehfest mit einer Bremsscheibe einer Bremsvorrichtung verbunden sein. Dabei können innere Steckwelle und ein äußerer Bremsscheibenflansch in vorteilhafter Weise derart zusammen wirken, daß sich Fugenkräfte die durch Verbindungsart und Betriebskräfte ergeben, gegenseitig und lagebedingt kompensieren können. Dies führt wiederum zu einem erhöhten Fugendruck.

Entsprechend einer weiteren Ausgestaltung der vorliegenden Erfindung ist die zweite Welle der Getriebeeinheit drehfest mit einer Bremsscheibe einer Bremsvorrichtung verbunden. Die Bremsscheibe kann in diesem Fall mittels Paßfeder- oder Spannverbindung mit der zweiten Welle verbunden sein. Dabei ist die Paßfeder- oder Spannverbindung vorteilhafterweise axial auf eine Kurzverzahnungskupplung zwischen der zweiten Welle und der Sonnenradwelle ausgerichtet. Damit kann eine Aufweitung der zweiten Welle durch die Kurzverzahnungskupplung an der Sonnenradwelle zur Sicherstellung eines hinreichenden Fugendrucks der Paßfeder- oder Spannverbindung an der Bremsscheibe genutzt werden. Dies erleichtert Auslegung sowie Montage und Demontage. Außerdem ermöglicht eine axial mittige Anordnung der Bremsvorrichtung eine reduzierte Baulänge sowie einen einfachen Austausch eines rückseitigen Rotorwellenlagers.

Die zweite Welle der Getriebeeinheit ist vorzugsweise mittels einer doppelreihigen Lagerung in X-Anordnung gelagert. Dies ermöglicht eine vollständig generatorseitige Lagerdemontage und eine einfache Lagereinstellung über einen rückseitigen Lagerdeckel.

Entsprechend einer besonders bevorzugten Weiterbildung der vorliegenden Erfindung ist der Kupplungsflansch mit der Arbeitsmaschinen- oder Rotorwelle elastisch verbindbar. Auf diese Weise ist eine kardanische Ankupplung einer Arbeitsmaschine oder Rotorwelle möglich, insbesondere mit Winkelversatz. Eine solche Ankupplung kann beispielsweise mittels elastischer Bolzen realisiert sein. Des weiteren weist vorteilhafterweise auch das Getriebegehäuse eine kardanische umfangssymmetrische oder teilsymmetrische Aufhängung zur Verbindung mit einem tragenden Strukturelement der Windkraftanlage auf. Das tragende Strukturelement kann beispielsweise ein Fundamentlager mit einer Anbindung an einen Rahmen oder eine Gondel der Windkraftanlage sein. Durch eine doppel- oder vollkardanische Aufhängung des Antriebssystems innerhalb des tragenden Strukturelements und durch eine kardanische Anbindung des Kupplungsflansches können lager- bzw. verzahnungsschädigende Einflüsse vermieden werden. Aufgrund von Hauptrahmenverformungen einer Windkraftanlage entstehende Verschiebungen in Fundamentauflagern, die entsprechend bisherigen Lösungen über eine Aufhängung eines Antriebstrangs in diesen eingekoppelt werden, führen somit nicht zu unerwünschten Zwangskräften, sondern werden durch die kardanische Aufhängung vermieden. Damit ist das Antriebssystem lediglich Torsionsbelastungen ausgesetzt.

Bei Verwendung des erfindungsgemäßen Antriebssystems in einer Windkraftanlage ist die Getriebeeinheit mit einer Generatoreinheit verbunden. Des weiteren ist die erste Welle der Getriebeeinheit in diesem Fall eine getriebeseitige Antriebswelle. Die zweite Welle der Generatoreinheit ist dagegen eine getriebeseitige Abtriebswelle. Der Kupplungsflansch der getriebeseitigen Antriebswelle ist bei Verwendung des erfindungsgemäßen Antriebssystems in einer Windkraftanlage mit einer Rotorwelle verbindbar.

Die vorliegende Erfindung wird nachfolgend an einem Ausführungsbeispiel anhand der Zeichnung näher erläutert. Es zeigt
- Figur 1: eine perspektivische Schnittdarstellung einer Variante eines Antriebssystems für eine Windkraftanlage mit kurzer Steckwelle,
- Figur 2: eine Schnittdarstellung des in Figur 1 dargestellten Antriebssystems mit Getriebe- und Generatoreinheit,
- Figur 3: eine perspektivische Schnittdarstellung einer Generatoreinheit einer Variante eines Antriebssystems für eine Windkraftanlage mit durchgehender Steckwelle,
- Figur 4: eine Schnittdarstellung einer ersten Variante eines Gehäusezwischenflansches zwischen Getriebe- und Generatoreinheit,
- Figur 5: eine Schnittdarstellung einer zweiten Variante eines Gehäusezwischenflansches zwischen Getriebe- und Generatoreinheit,
- Figur 6: eine schematische Darstellung eines Antriebssystems für eine Windkraftanlage einschließlich Netzanbindung,
- Figur 7: eine Ringstütze zur vollkardanischen Aufhängung des Antriebssystems gemäß Figur 1 mit einer korrespondierenden zweiarmige Drehmomentstütze,
- Figur 8: zwei Ringsegmentstützen zur vollkardanischen Aufhängung des Antriebssystems gemäß Figur 1 mit korrespondierenden Drehmomentstützen,
- Figur 9: zwei Ringsegmentstützen in einer gegenüber Figur 8 abgewandelten Variante.

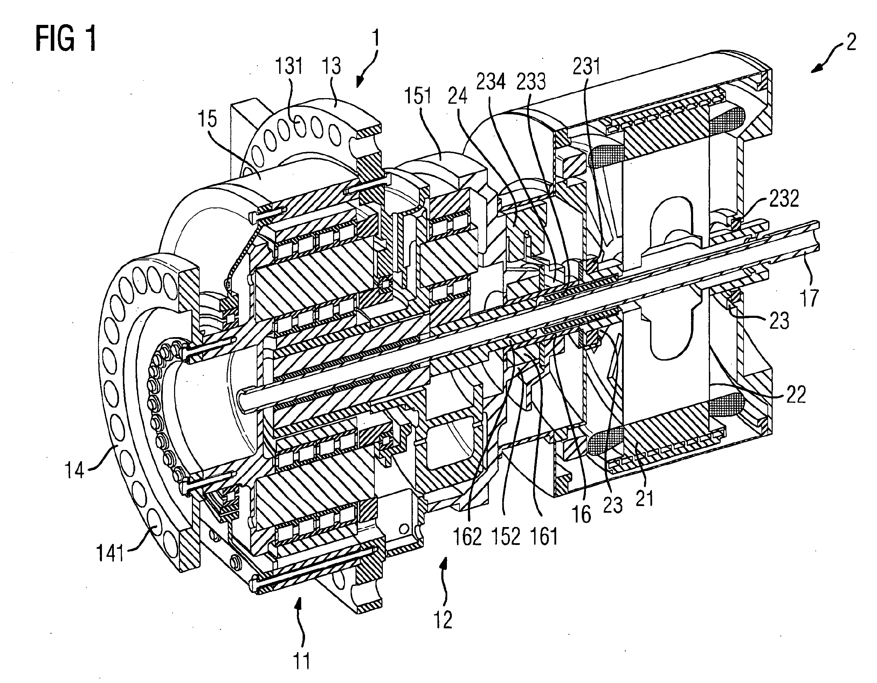

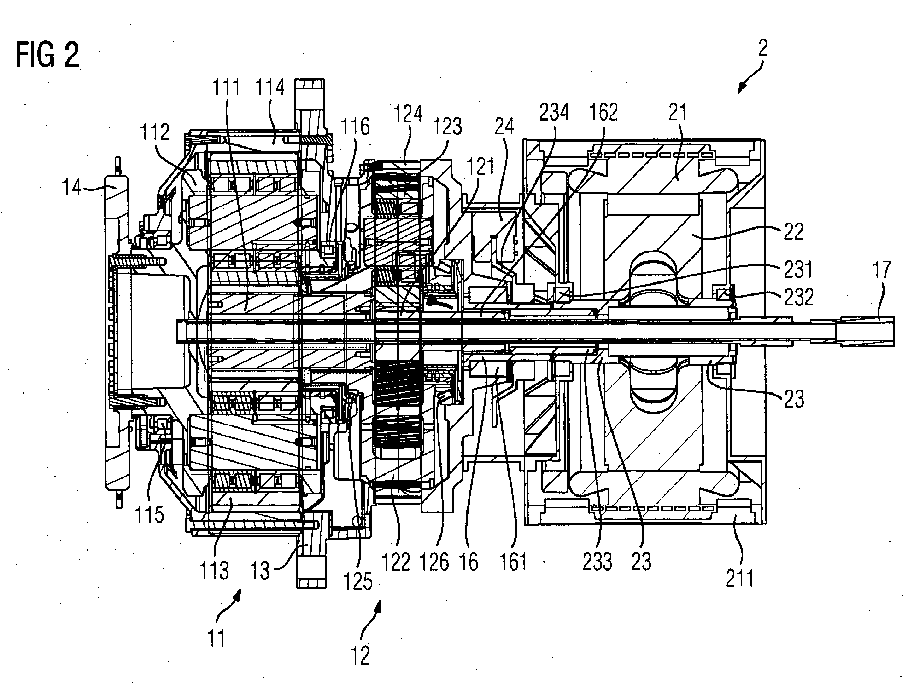

Das in Figur 1 dargestellte Antriebssystem für eine Windkraftanlage weist ein Getriebeeinheit 1 mit einer ersten 11 und zweite Planetenradstufe 12 in koaxialer Bauform auf. Wie auch der Schnittdarstellung gemäß Figur 2 zu entnehmen ist, umfaßt jede Planetenradstufe 11, 12 jeweils ein Hohlrad 114, 124, mehrere Planetenräder 113, 123, einen Planetenträger 112, 122 und ein Sonnenrad 111, 121.

Die Getriebeeinheit 1 ist über eine als Hohlwelle ausgestaltete Abtriebswelle 16 der Getriebeeinheit 1 mit einer Generatoreinheit 2 verbunden und in einem Getriebegehäuse 15 angeordnet. Die Abtriebswelle 16 umgibt mit ihrem getriebeseitigen Endabschnitt einen generatorseitigen Endabschnitt einer Sonnenradwelle 162 der zweiten Planetenradstufe 12 konzentrisch und ist dort mit dieser drehfest verbunden. Dabei sind die Abtriebswelle 16 und die Sonnenradwelle 162 beispielsweise über eine innerhalb der Abtriebswelle 16 angeordnete Kupplung oder Spannverbindung miteinander verbunden. Dies kann insbesondere mittels einer Kurzverzahnung, Bogenverzahnung, Polygonverbindung, Paßfederverbindung, elastischen Bolzenkupplung oder eines Innen-Spannsatzes erfolgen.

Die Generatoreinheit 2 umfaßt einen Stator 21 und einen drehfest mit einer Rotorhohlwelle 23 verbundenen Rotor 22. Die Rotorhohlwelle 23 ist axial von der Abtriebswelle 16 der Getriebeeinheit 1 beabstandet angeordnet bzw. schließt sich axial an diese an. Darüber hinaus ist die Rotorhohlwelle 23 mit einer Steckwelle 233 drehfest verbunden, die an ihrem getriebeseitigen Endabschnitt von der Abtriebswelle 16 der Getriebeeinheit 1 konzentrisch umgeben und dort mit dieser drehfest verbunden ist. Dabei sind die Abtriebswelle 16 und die Steckwelle 233 beispielsweise über eine innerhalb der Abtriebswelle 16 angeordnete Kupplung oder Spannverbindung miteinander verbunden. Dies kann insbesondere mittels einer Kurzverzahnung, Bogenverzahnung, Polygonverbindung, Paßfederverbindung, elastischen Bolzenkupplung oder eines Innen-Spannsatzes erfolgen.

Bei der in Figur 1 und 2 dargestellten Variante eines Antriebssystems mit kurzer Steckwelle ist die Rotorhohlwelle 23 mit der Steckwelle 233 an einem getriebeseitigen Ende der Rotorhohlwelle 23 über eine innerhalb der Rotorhohlwelle 23 angeordnete Kupplung oder Spannverbindung verbunden. Auch in diesem Fall kann dies mittels einer Kurzverzahnung, Bogenverzahnung, Polygonverbindung, Paßfederverbindung, elastischen Bolzenkupplung oder eines Innen-Spannsatzes erfolgen.

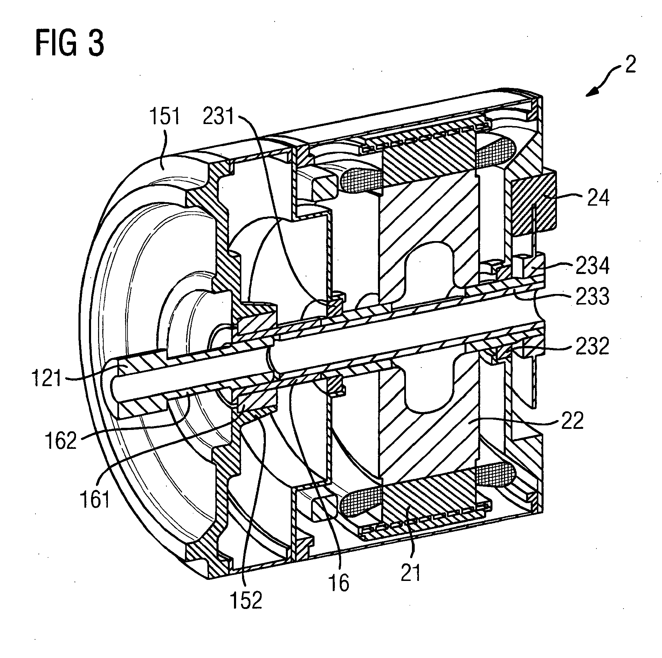

Entsprechend der in Figur 3 dargestellten Variante eines Antriebssystems mit durchgehender Steckwelle erstreckt sich die Steckwelle 233 axial komplett über die Rotorhohlwelle 23 und ist an einer von der Getriebeeinheit 1 abgewandten Stirnseite der Generatoreinheit 2 mit der Rotorhohlwelle 23 mittels einer Kupplung oder Spannverbindung verbunden. Eine Verbindung zwischen Rotorhohlwelle 23 und Steckwelle 233 kann dabei mittels einer Kurzverzahnung, Bogenverzahnung, Polygonverbindung, Paßfederverbindung, Flanschverbindung, elastischen Bolzenkupplung oder eines Innen- oder Außen-Spannsatzes realisiert sein.

Bei beiden in den Figuren 1 bis 3 dargestellten Varianten eines Antriebssystems ist zwischen Getriebeeinheit 1 und Generatoreinheit 2 ein Getriebegehäusestutzen 152 angeordnet, der die Abtriebswelle 16 konzentrisch umgibt und einen Lagersitz für eine der Abtriebswelle 16 zugeordnete Lageranordnung 161 bildet. Mittels dieser Lageranordnung 161 ist auch die Sonnenradwelle 162 gelagert. Dabei umgibt der Getriebegehäusestutzen 152 einen generatorseitigen Endabschnitt der Sonnenradwelle 162 konzentrisch. Die Lageranordnung 161 der Abtriebswelle 16 am Gehäusestutzen 152 umfaßt vorzugsweise ein doppelreihiges Lager in X-Anordnung. Innerhalb der Abtriebswelle 16 und der Rotorhohlwelle 23 ist im vorliegenden Ausführungsbeispiel ein Pitch-Rohr 17 angeordnet, das sich axial über das gesamte Antriebssystem erstreckt.

Zwei jeweils an einer Generatorstirnseite angeordnete Gehäusedeckel bilden Lagersitze für ein erstes Lager 231 und ein zweites Lager 232 der Rotorhohlwelle 23. Der Lagersitz für das erste Lager 231 der Rotorhohlwelle 23 ist dabei durch einen der Getriebeeinheit 1 zugewandten Gehäusedeckel an einer ersten Generatorstirnseite gebildet, während der Lagersitz für das zweite Lager 232 der Rotorhohlwelle 23 durch einen von der Getriebeeinheit 1 abgewandten Gehäusedeckel an zweiten Generatorstirnseite gebildet ist.

Der Getriebeeinheit 1 ist eine an den Planetenträger 112 der ersten Planetenradstufe 11 angeformte Antriebswelle zugeordnet, die einen mit einer Rotorwelle verbindbaren Kupplungsflansch 14 aufweist und über den Planetenträger 112 der ersten Planetenradstufe 11 gelagert ist. Dem Planetenträger 112 der ersten Planetenradstufe 11 sind zwei zwischen Planetenträgerwangen und Getriebegehäuse 15 angeordnete Lager 115 und 116 zugeordnet, die ein erstes und ein zweites Hauptlager der Getriebeeinheit 1 darstellen. In entsprechender Weise ist der Planetenträger 122 der zweiten Planetenradstufe 12 durch zwei zwischen Planetenträgerwangen und Getriebegehäuse 15 angeordnete Lager 125 und 126 gelagert.

Bei der in Figur 1 und 2 dargestellten Variante eines Antriebssystems ist die Abtriebswelle 16 der Getriebeeinheit 1 drehfest mit einer Bremsscheibe 234 einer Bremsvorrichtung verbunden. Ein der Bremsscheibe 234 zugeordneter Bremssattel 24 ist entsprechend Figur 1 und 2 an einen zwischen Getriebeeinheit 1 und Generatoreinheit 2 angeordneten Gehäusezwischenflansch 151 befestigt. Die Bremsscheibe 234 kann beispielsweise mittels Paßfeder- oder Spannverbindung mit der Abtriebswelle 16 verbunden sein. Vorzugsweise ist die Paßfeder- oder Spannverbindung axial auf eine Kurzverzahnungskupplung zwischen der Abtriebswelle 16 und der Sonnenradwelle 162 ausgerichtet.

Entsprechend der in Figur 3 dargestellten Variante eines Antriebssystems ist die Rotorhohlwelle 23 an der von der Getriebeeinheit 1 abgewandten zweiten Generatorstirnseite drehfest mit einer Bremsscheibe 234 einer Bremsvorrichtung verbunden. Die Bremsscheibe 234 ist damit für Wartungszwecke einfach zugänglich. Ein der Bremsscheibe 234 zugeordneter Bremssattel 24 ist entsprechend Figur 3 an einem Gehäusedeckel an der zweiten Generatorstirnseite befestigt. Die Steckwelle 233 kann bei der in Figur 3 dargestellten Variante darüber hinaus an der zweiten Generatorstirnseite mit einem scheibenförmig ausgestalteten Flansch verbunden sein, der mittels elastischer Bolzen mit der Bremsscheibe 234 verbunden ist.

Grundsätzlich sind auch Mischformen der in den Figur 1 bis 3 dargestellten Varianten möglich. Beispielsweise kann eine durchgehende Steckwelle mit einer mittig angeordneten Bremsvorrichtung kombiniert sein, oder eine kurze Steckwelle mit einer rückseitigen Bremsvorrichtung.

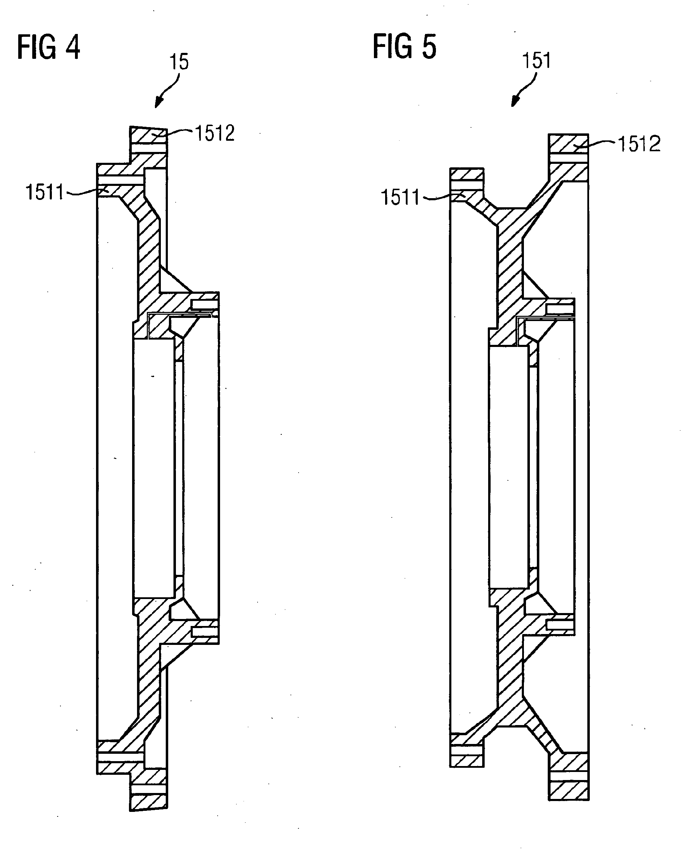

Der die Lageranordnung 161 der Abtriebswelle 23 konzentrisch umgebende Gehäusestutzen 152 ist im vorliegenden Ausführungsbeispiel an den zwischen Getriebeeinheit 1 und Generatoreinheit 2 angeordneten Gehäusezwischenflansch 151 angeformt. Am Gehäusezwischenflansch 151 ist sowohl ein Statormantel 211 der Generatoreinheit 2 als auch das Hohlrad 124 der zweiten Planetenradstufe 12 montiert. Zusätzlich weist der Gehäusezwischenflansch 151 einen Lagersitz für ein generatorseitiges Planetenträgerlager 126 der zweiten Planetenradstufe 12 auf. Entsprechend Figur 4 weist der Gehäusezwischenflansch 151 jeweils einen Flanschfortsatz 1511, 1512 auf, an dem der Statormantel 211 bzw. das Hohlrad 124 der zweiten Planetenradstufe 12 montiert ist. In Figur 5 ist eine Variante eines Gehäusezwischenflansches 151 dargestellt, bei welcher der dem Statormantel 211 zugeordnete Flanschfortsatz 1512 und der dem Hohlrad 124 zugeordnete Flanschfortsatz 1511 axial voneinander beabstandet sind.

Das Getriebegehäuse 15 weist eine vollkardanische umfangssymmetrische oder teilsymmetrische Aufhängung 13 zur Verbindung mit einem tragenden Strukturelement der Windkraftanlage aufweist. Dieses tragende Strukturelement ist beispielsweise ein Rahmen oder eine Gondel der Windkraftanlage.

Die zweite Planetenradstufe 12 ist hinsichtlich ihrer Übersetzung derart dimensioniert, daß sich bei Wahl einer durch 2 teilbaren Generatorpolzahl - entsprechend einer vorteilhaften Ausgestaltung auch durch 3 teilbar - sowie bei optimaler Auslegung für Nenndrehzahl im wesentlichen identische Außendurchmesser von Stator der Generatoreinheit 2 und Hohlrad 124 der zweiten Planetenradstufe 12 ergeben. Generatorseitige Lager der Getriebeeinheit 1 sind elektrisch isolierend ausgeführt. Damit kann ein Stromfluß von der Getriebeeinheit 1 in einen Rotor der Generatoreinheit 2 vermieden werden.

Durch die vollkardanischen Aufhängung des Antriebssystems in Kombination mit einer Transversal- und Radialkraftfreiheit und einer Zweipunkt- bzw. Momentenlagerung des Antriebssystems entsteht ein Antriebstrang, der nur noch mit Torsion beaufschlagt wird. Durch ein gehäuseseitiges Zusammenfügen von Getriebeeinheit 1 und Generatoreinheit 2 unter Ausnutzung ihrer hohen Steifigkeit kann trotz deutlich weniger steifer Auflagerelemente in der kardanischen Aufhängung zumindest eine deutliche Reduktion von Zwangskräften im Antriebsstrang erzielt werden.

Durch Kombination der Zweipunkt- bzw. Momentenlagerung des Antriebssystems mit der vollkardanischen Aufhängung des auch die Generatoreinheit 2 umfassenden Getriebegehäuses 15 wird eine zwischen Getriebeeinheit 1 und Generatoreinheit 2 angeordnete Kupplung deutlich weniger belastet. Diese Kupplung kann daher erheblich steifer ausgeführt werden. Dies bietet wiederum weitere Vorteile in bezug auf Betriebsdynamik.

Eine Ausgestaltung der Hauptlager der Getriebeeinheit 1 kann weiterhin ohne Berücksichtigung von Auflagern nachfolgender Komponenten erfolgen. Dadurch wird ein Einsatz von Momentenlagern, die lediglich einen deutlich verringerten Bauraum benötigen, für die Hauptlager der Getriebeeinheit 1 in einer technisch beherrschbaren Form für Großantriebe möglich. Darüber hinaus ist eine torsionsbedingte Wellenflucht-Verdrillung erfindungsgemäß durch die vollkardanische Aufhängung für die Getriebeeinheit 1 schädigungsirrelevant geworden.

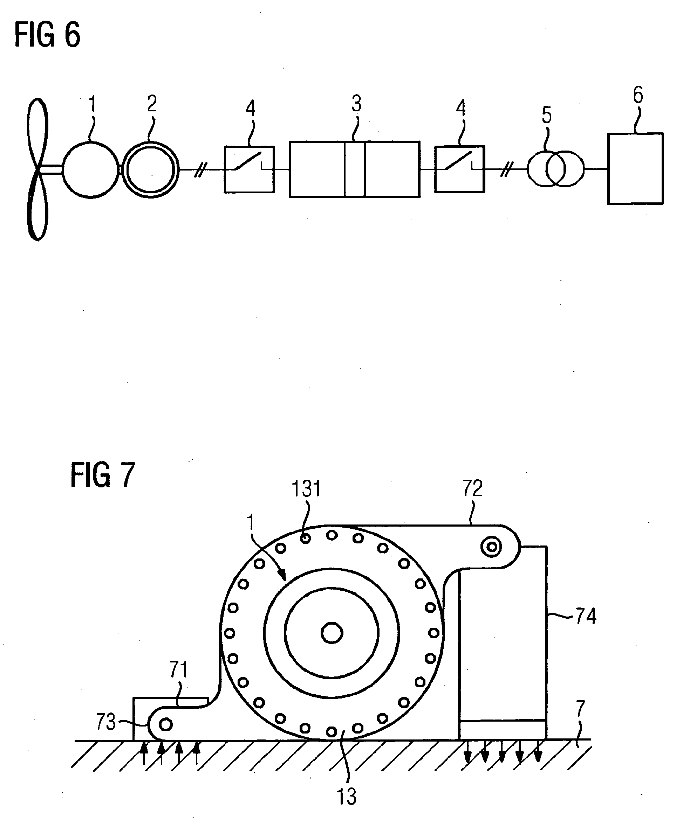

Die Generatoreinheit 2 weist im vorliegenden Ausführungsbeispiel 3 unabhängige Wicklungssysteme auf, die an einen in Figur 6 dargestellten Vollumrichter 3 angeschlossen sind. Der Vollumrichter 3 ermöglicht eine netzdynamische Entkopplung und ist über Lasttrennschalter 4 an die Generatoreinheit 2 einerseits sowie andererseits an einen Transformator 5 zur Leistungseinspeisung in ein Energieversorgungsnetz 6 angeschlossen. Darüber hinaus sind für jeden Pol getrennt isolierte Generatorwicklungen vorgesehen. Des weiteren sind die 3 unabhängigen Wicklungssysteme außerhalb des die Generatoreinheit 2 umgebenden Getriebegehäuses 15 verschaltet. Die Generatoreinheit ist 6- bis 30-polig ausgestaltet, bevorzugt 12- bis 24-polig.

Entsprechend dem in Figur 7 dargestellten Ausführungsbeispiel ist die vollkardanische Aufhängung 13 durch eine das Getriebegehäuse 15 vollumfänglich radial umgebende Ringstütze gebildet. Die Ringstütze 13 weist in Umfangsrichtung mehrere im wesentlichen äquidistant angeordnete Bohrungen 131 auf, in die elastische Bolzen mit jeweils einem ersten Endabschnitt eingesetzt sind. Die elastischen Bolzen sind mit einer korrespondierenden Drehmomentstütze am tragenden Strukturelement 7 der Windkraftanlage verbunden. Die korrespondierende Drehmomentstütze umfaßt ebenfalls ein Ringelement mit in Umfangsrichtung im wesentlichen äquidistant angeordneten Bohrungen, in welche die elastischen Bolzen mit einem zweiten Endabschnitt eingesetzt sind. Außerdem weist die korrespondierende Drehmomentstütze entsprechend dem in Figur 7 dargestellten Ausführungsbeispiel zwei asymmetrisch angeformte Stützarme 71, 72 auf, die jeweils mit einem Endabschnitt in eine Aufnahme 73, 74 am tragenden Strukturelement 7 eingesetzt und dort mit diesem verbunden sind.

Die elastischen Bolzen der vollkardanischen Aufhängung 13 sind axial demontierbare Elastomerbolzen. Auch der Kupplungsflansch 14 weist entsprechend Figur 1 in Umfangsrichtung mehrere im wesentlichen äquidistant angeordnete Bohrungen 141 auf, in die axial demontierbare Elastomerbolzen eingesetzt sind, die mit einem korrespondierenden Rotorwellenkupplungsflansch verbunden sind. Bei demontierten Elastomerbolzen der vollkardanischen Aufhängung 13 und des Kupplungsflansches 14 ist eine hinsichtlich einer Wellenanordnung der Getriebeeinheit 1 radiale Aus- bzw. Einbaurichtung des Antriebssystems freigegeben.

Zusatzaggregate der Getriebeeinheit 1, beispielsweise Ölanlage, Kühler und Hydraulik, sind vorteilhafterweise direkt am tragenden Strukturelement 7 der Windkraftanlage montiert. Über die vollkardanische Aufhängung 13 sowie eine elastische Kupplung zwischen Rotorwelle und Antriebswelle der Getriebeeinheit 1 sind die Zusatzaggregate damit vom Getriebegehäuse 15 entkoppelt.

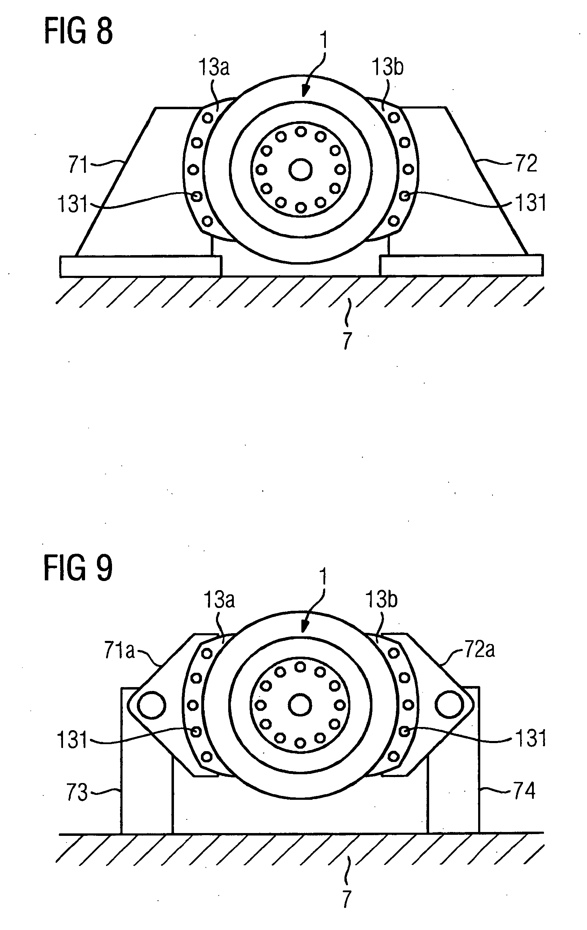

In Figur 8 und 9 sind jeweils zwei Ringsegmentstützen 13a, 13b zur teilumfänglichen vollkardanischen Aufhängung des Antriebssystems dargestellt. Die Ringsegmentstützen 13a, 13b weisen jeweils in Umfangsrichtung mehrere im wesentlichen äquidistant angeordnete Bohrungen 131 auf, in die elastische Bolzen eingesetzt sind. Zusätzlich sind die elastischen Bolzen mit korrespondierenden Drehmomentstützen 71, 72 am tragenden Strukturelement 7 der Windkraftanlage verbunden. Entsprechend dem in Figur 8 dargestellten Ausführungsbeispiel sind die korrespondierenden Drehmomentstützen 71, 72 direkt am tragenden Strukturelement 7 der Windkraftanlage befestigt. Dagegen umfassen die korrespondierende Drehmomentstützen entsprechend dem in Figur 9 dargestellten Ausführungsbeispiel jeweils einen Stützarm 71a, 72a, der mit einem Endabschnitt in eine Aufnahme 73, 74 am tragenden Strukturelement eingesetzt und dort mit diesem verbunden ist. Damit bleibt eine Einbaufähigkeit wie eine herkömmliche Zweiarmstütze erhalten, ohne daß hierzu eine Hauptrahmenanpassung an der Windkraftanlage erforderlich ist. Da eine Zwangskraftfreiheit bereits gegeben ist, können bekannte Elastomerauflager verwendet werden, die vorzugsweise vollständig entsprechend schwingungsdämpfenden Kriterien ausgelegt sind.

Sowohl bei dem in Figur 8 dargestellten Ausführungsbeispiel als auch bei dem in Figur 9 dargestellten Ausführungsbeispiel umfassen die korrespondierenden Drehmomentstützen am tragenden Strukturelement 7 jeweils ein Ringsegment mit in Umfangsrichtung im wesentlichen äquidistant angeordneten Bohrungen 131. In diesen Bohrungen 131 werden die elastischen Bolzen eingesetzt, die ebenso wie beim Ausführungsbeispiel entsprechend Figur 7 als axial demontierbare Elastomerbolzen ausgestaltet sein können. Vorzugsweise schneiden sich Symmetrieachse der Drehmomentstützen und Drehachse des Antriebssystems.

Darüber hinaus kann der Kupplungsflansch entsprechend einer weiteren Ausführungsform mehrere zueinander versetzte Bohrungsreihen aufweisen, in deren Bohrungen axial demontierbare Elastomerbolzen eingesetzt sind. Dadurch kann der Kupplungsflansch hinsichtlich seines Außendurchmessers bei gleichen Bohrungsabständen verkleinert ausgeführt werden.

Des weiteren können die Elastomerbolzen unterschiedliche, entsprechend Durchmesser und Flanschart angepaßte Steifigkeiten aufweisen. Insbesondere der Kupplungsflansch mit im Vergleich zur Aufhängung kleinerem Durchmesser kann aus härterem Material sein, während die Aufhängung aus weicherem Material gefertigt sein kann.

Die Verwendung des beschriebenen Antriebssystems ist nicht nur auf Windkraftanlagen beschränkt, sondern beispielsweise auch in Mühlenantriebssystemen denkbar, bei denen die Generatoreinheit durch eine Motoreinheit ersetzt wird.

## Patentansprüche

1. Antriebssystem für eine Windkraftanlage mit
- einer zumindest eine Planetenradstufe (11, 12), die ein Hohlrad (114, 124), mehrere Planetenräder (113, 123), einen Planetenträger (112, 122) und ein Sonnenrad (111, 121) aufweist, umfassenden Getriebeeinheit (1),
- einer der Getriebeeinheit (1) zugeordneten ersten Welle, die einen mit einer Arbeitsmaschinen- oder Rotorwelle verbindbaren Kupplungsflansch (14) aufweist und über den Planetenträger (112) gelagert ist,
- einer mit der Getriebeeinheit (1) verbundene Motor- oder Generatoreinheit (2),
- einer der Getriebeeinheit (1) zugeordneten, als Hohlwelle ausgestalteten zweiten Welle (16), die mit ihrem getriebeseitigen Endabschnitt einen motor- oder generatorseitigen Endabschnitt einer Sonnenradwelle (162) konzentrisch umgibt und dort mit dieser drehfest verbunden ist,
- einen drehfest mit einer Rotorhohlwelle (23) verbundenen Rotor (22) der Motor- oder Generatoreinheit (2),
- einer drehfest mit der Rotorhohlwelle (23) verbundenen Steckwelle (233), die mit ihrem getriebeseitigen Endabschnitt von der zweiten Welle (16) der Getriebeeinheit (1) konzentrisch umgeben und dort mit dieser drehfest verbunden ist,
- einen zwischen Getriebeeinheit (1) und Motor- oder Generatoreinheit (2) angeordneten Getriebegehäusestutzen (152), der die zweite Welle (16) der Getriebeeinheit (1) konzentrisch umgibt und einen Lagersitz für eine der zweiten Welle (16) zugeordnete Lageranordnung (161) bildet, mittels derer auch die Sonnenradwelle (162) gelagert ist,
- zwei jeweils an einer Motor- oder Generatorstirnseite angeordneten Gehäusedeckeln, die Lagersitze für ein erstes (231) und ein zweites Lager (232) der Rotorhohlwelle (23) bilden.

2. Antriebssystem nach Anspruch 1,
bei dem die zweite Welle (16) der Getriebeeinheit (1) mit der Sonnenradwelle (162) über eine innerhalb der zweiten Welle (16) angeordnete Kupplung oder Spannverbindung verbunden ist.

3. Antriebssystem nach Anspruch 2,
bei dem die zweite Welle (16) der Getriebeeinheit (1) mit der Sonnenradwelle (162) mittels einer Kurzverzahnung, Bogenverzahnung, Polygonverbindung, Paßfederverbindung, elastischen Bolzenkupplung oder eines Innen-Spannsatzes verbunden ist.

4. Antriebssystem nach einem der Ansprüche 1 bis 3,
bei dem die zweite Welle (16) der Getriebeeinheit (1) mit der Steckwelle (233) über eine innerhalb der zweiten Welle (16) angeordnete Kupplung oder Spannverbindung verbunden ist.

5. Antriebssystem nach Anspruch 4,
bei dem die zweite Welle (16) der Getriebeeinheit (1) mit der Steckwelle (233) mittels einer Kurzverzahnung, Bogenverzahnung, Polygonverbindung, Paßfederverbindung, elastischen Bolzenkupplung oder eines Innen-Spannsatzes verbunden ist.

6. Antriebssystem nach einem der Ansprüche 1 bis 5,
bei dem die Rotorhohlwelle (23) mit der Steckwelle (233) an einem getriebeseitigen Ende der Rotorhohlwelle (23) über eine innerhalb der Rotorhohlwelle (23) angeordnete Kupplung oder Spannverbindung verbunden ist.

7. Antriebssystem nach Anspruch 6,
bei dem die Rotorhohlwelle (23) mit der Steckwelle (233) mittels einer Kurzverzahnung, Bogenverzahnung, Polygonverbindung, Paßfederverbindung, elastischen Bolzenkupplung oder eines Innen-Spannsatzes verbunden ist.

8. Antriebssystem nach einem der Ansprüche 1 bis 5,
bei dem sich die Steckwelle (233) axial komplett über die Rotorhohlwelle (23) erstreckt und an einer von der Getriebeeinheit (1) abgewandten Stirnseite der Motor- oder Generatoreinheit (2) mit der Rotorhohlwelle mittels einer Kupplung oder Spannverbindung verbunden ist.

9. Antriebssystem nach Anspruch 8,
bei dem die Rotorhohlwelle (23) mit der Steckwelle (233) mittels einer Kurzverzahnung, Bogenverzahnung, Polygonverbindung, Paßfederverbindung, Flanschverbindung, elastischen Bolzenkupplung oder eines Innen- oder Außen-Spannsatzes verbunden ist.

10. Antriebssystem nach einem der Ansprüche 1 bis 9,
bei dem die Rotorhohlwelle (23) an einer von der Getriebeeinheit (1) abgewandten Stirnseite der Motor- oder Generatoreinheit (2) drehfest mit einer Bremsscheibe (234) einer Bremsvorrichtung verbunden ist.

11. Antriebssystem nach Anspruch 10,
bei dem die Steckwelle (233) an einer von der Getriebeeinheit (1) abgewandten Stirnseite der Motor- oder Generatoreinheit (2) mit einem scheibenförmig ausgestalteten Flansch verbunden ist, der mittels elastischer Bolzen mit der Bremsscheibe (234) verbunden ist.

12. Antriebssystem nach einem der Ansprüche 1 bis 9,
bei dem die zweite Welle (16) der Getriebeeinheit (1) drehfest mit einer Bremsscheibe einer Bremsvorrichtung verbunden ist.

13. Antriebssystem nach Anspruch 12,
bei dem die Bremsscheibe (234) mittels Paßfeder- oder Spannverbindung mit der zweiten Welle (16) verbunden ist, und bei dem die Paßfeder- oder Spannverbindung axial auf eine Kurzverzahnungskupplung zwischen der zweiten Welle (16) und der Sonnenradwelle (162) ausgerichtet ist.

14. Antriebssystem nach einem der Ansprüche 1 bis 13,
bei dem die zweite Welle (16) der Getriebeeinheit (1) mittels einer doppelreihigen Lagerung (161) in X-Anordnung gelagert ist.

15. Antriebssystem nach einem der Ansprüche 1 bis 14,
bei dem der Lagersitz für das erste Lager (231) der Rotorhohlwelle (23) durch einen der Getriebeeinheit (1) zugewandten Gehäusedeckel an einer ersten Motor- oder Generatorstirnseite gebildet ist, und bei dem der Lagersitz für das zweite Lager (232) der Rotorhohlwelle (23) durch einen von der Getriebeeinheit (1) abgewandten Gehäusedeckel an zweiten Motor- oder Generatorstirnseite gebildet ist

16. Antriebssystem nach einem der Ansprüche 1 bis 15,
bei dem die Rotorhohlwelle (23) axial von der zweiten Welle (16) der Getriebeeinheit (1) beabstandet ist oder sich axial an diese anschließt.

17. Antriebssystem nach einem der Ansprüche 1 bis 16,
bei dem der Getriebegehäusestutzen (152) einen motor- oder generatorseitigen Endabschnitt der Sonnenradwelle (162) konzentrisch umgibt.

18. Antriebssystem nach einem der Ansprüche 1 bis 17,
bei dem die ersten Welle der Getriebeeinheit einen mit der Arbeitsmaschinen- oder Rotorwelle elastisch verbindbaren Kupplungsflansch (14) aufweist, und bei dem ein Getriebegehäuse (15) eine kardanische umfangssymmetrische oder teilsymmetrische Aufhängung (13) zur Verbindung mit einem tragenden Strukturelement (7) der Windkraftanlage aufweist.

19. Antriebssystem nach Anspruch 18,
bei dem die kardanische Aufhängung durch eine das Getriebegehäuse (15) vollumfänglich radial umgebende Ringstütze (13) gebildet ist, die in Umfangsrichtung mehrere im wesentlichen äquidistant angeordnete Bohrungen (131) aufweist, in die elastische Bolzen eingesetzt sind, die mit einer korrespondierenden Drehmomentstütze am tragenden Strukturelement (7) der Windkraftanlage verbindbar sind.

20. Antriebssystem nach Anspruch 19,
bei dem die korrespondierende Drehmomentstütze ein Ringelement mit in Umfangsrichtung im wesentlichen äquidistant angeordneten Bohrungen umfaßt, in welche die elastischen Bolzen einsetzbar sind.

21. Antriebssystem nach Anspruch 20,
bei dem die korrespondierende Drehmomentstütze zwei symmetrisch oder asymmetrisch angeformte Stützarme (71, 72) umfaßt, die jeweils mit einem Endabschnitt in eine Aufnahme (73, 74) am tragenden Strukturelement (7) einsetzbar und dort mit diesem verbindbar sind.

22. Antriebssystem nach Anspruch 18,
bei dem die kardanische Aufhängung durch zwei das Getriebegehäuse teilumfänglich radial umgebende Ringssegmentstützen (13a, 13b) gebildet ist, die jeweils in Umfangsrichtung mehrere im wesentlichen äquidistant angeordnete Bohrungen (131) aufweisen, in die elastische Bolzen eingesetzt sind, die mit korrespondierenden Drehmomentstützen am tragenden Strukturelement (7) der Windkraftanlage verbindbar sind.

23. Antriebssystem nach Anspruch 22,
bei dem die korrespondierenden Drehmomentstützen jeweils ein Ringsegment (13a, 13b) mit in Umfangsrichtung im wesentlichen äquidistant angeordneten Bohrungen (131) umfassen, in welche die elastischen Bolzen einsetzbar sind.

24. Antriebssystem nach Anspruch 23,
bei dem die korrespondierenden Drehmomentstützen jeweils einen Stützarm (71a, 72a) umfassen, der mit einem Endabschnitt in eine Aufnahme (73, 74) am tragenden Strukturelement (7) einsetzbar und dort mit diesem verbindbar ist.

25. Antriebssystem nach einem der Ansprüche 19 bis 24,
bei dem die elastischen Bolzen der kardanischen Aufhängung axial demontierbare Elastomerbolzen sind, und bei dem der Kupplungsflansch in Umfangsrichtung mehrere im wesentlichen äquidistant angeordnete Bohrungen aufweist, in die axial demontierbare Elastomerbolzen eingesetzt sind, die mit einem korrespondierenden Arbeitsmaschinen- oder Rotorwellenkupplungsflansch verbindbar sind.

26. Antriebssystem nach Anspruch 25,
bei dem bei demontierten Elastomerbolzen der kardanischen Aufhängung und des Kupplungsflansches eine hinsichtlich einer Wellenanordnung der Getriebeeinheit radiale Aus- und/oder Einbaurichtung des Antriebssystems freigegeben ist.

27. Antriebssystem nach einem der Ansprüche 18 bis 26,
bei dem Zusatzaggregate der Getriebeeinheit direkt am tragenden Strukturelement der Windkraftanlage montiert und über die kardanische Aufhängung sowie eine elastische Kupplung zwischen Arbeitsmaschinen- oder Rotorwelle und der ersten Welle der Getriebeeinheit vom Getriebegehäuse entkoppelt sind.

28. Antriebssystem nach einem der Ansprüche 18 bis 27,
bei dem die Getriebeeinheit (1) ein erstes (115) und ein zweites Hauptlager (116) umfaßt, mittels derer die erste Welle der Getriebeeinheit gelagert ist, und die zwischen Planetenträgerwangen und Getriebegehäuse (15) angeordnet sind.

29. Antriebssystem nach einem der Ansprüche 18 bis 28,
bei dem die Getriebeeinheit (1) eine erste (11) und zweite Planetenradstufe (12) in koaxialer Bauform umfaßt.

30. Antriebssystem nach einem der Ansprüche 1 bis 29,
bei dem ein motor- oder generatorseitiges Lager der Getriebeeinheit elektrisch isolierend ausgeführt ist.

31. Antriebssystem nach einem der Ansprüche 1 bis 30,
bei dem die Getriebeeinheit mit einer Generatoreinheit verbunden ist, und bei dem die erste Welle der Getriebeeinheit eine getriebeseitige Antriebswelle ist, und bei dem die zweite Welle der Generatoreinheit eine getriebeseitige Abtriebswelle, und bei dem der Kupplungsflansch der getriebeseitigen Antriebswelle mit einer Rotorwelle verbindbar ist.

## Claims

1. Drive system for a wind turbine having
- a transmission unit (1) comprising at least one planetary gear stage (11, 12) which has an internal gear wheel (114, 124), a plurality of planetary gears (113, 123), a planet support (112, 122) and a sun gear (111, 121),
- a first shaft associated with the transmission unit (1), said shaft comprising a coupling flange (14) which is connectable to a driven machine shaft or rotor shaft and is mounted by means of the planet support (112),
- a motor unit or a generator unit (2) connected to the transmission unit (1),
- a second shaft (16), associated with the transmission unit (1) and configured as a hollow shaft, which with the transmission-side end section thereof concentrically surrounds a motor-side or generator-side end section of a sun wheel shaft (162) and there is non-rotatably connected thereto,
- a rotor (22) of the motor unit or generator unit (2) which is non-rotatably connected to a rotor hollow shaft (23),
- a stub shaft (233) which is non-rotatably connected to the rotor hollow shaft (23), the transmission-side end section of which is concentrically surrounded by the second shaft (16) of the transmission unit (1) and there is non-rotatably connected thereto,
- arranged between the transmission unit (1) and the motor or generator unit (2), a transmission housing connecting piece (152) which concentrically surrounds the second shaft (16) of the transmission unit (1) and provides a bearing seating for a bearing arrangement (161) associated with the second shaft (16), by means of which the sun wheel shaft (162) is also mounted,
- two housing covers each arranged on a motor or generator end face, providing bearing seatings for a first bearing (231) and second bearing (232) of the rotor hollow shaft (23).

2. Drive system according to claim 1,
the second shaft (16) of the transmission unit (1) being connected to the sun wheel shaft (162) by means of a coupling or clamping connection arranged within the second shaft (16).

3. Drive system according to claim 2,
the second shaft (16) of the transmission unit (1) being connected to the sun wheel shaft (162) by means of a short toothed coupling, spiral toothing, a polygonal connection, a keyed connection, an elastic bolt coupling or an internal clamping set.

4. Drive system according to one of the claims 1 to 3,
the second shaft (16) of the transmission unit (1) being connected to the stub shaft (233) by means of a coupling or clamping connection arranged within the second shaft (16).

5. Drive system according to claim 4,
the second shaft (16) of the transmission unit (1) being connected to the stub shaft (233) by means of a short toothed coupling, spiral toothing, a keyed connection, an elastic bolt coupling or an internal clamping set.

6. Drive system according to one of the claims 1 to 5,
the rotor hollow shaft (23) being connected to the stub shaft (233) at a transmission-side end of the rotor hollow shaft (23) means of a coupling or a clamping connection arranged within the rotor hollow shaft (23).

7. Drive system according to claim 6,
the rotor hollow shaft (23) being connected to the stub shaft (233) by means of a short toothed coupling, spiral toothing, a polygonal connection, a keyed connection, an elastic bolt coupling or an internal clamping set.

8. Drive system according to one of the claims 1 to 5,
the stub shaft (233) extending axially entirely beyond the rotor hollow shaft (23) and being connected to the rotor hollow shaft by means of a coupling or clamping connection at an end side of the motor or generator unit (2) facing away from the transmission unit (1).

9. Drive system according to claim 8,
the rotor hollow shaft (23) being connected to the stub shaft (233) by means of a short toothed coupling, spiral toothing, a polygonal connection, a keyed connection, a flange connection, an elastic bolt coupling or an internal or external clamping set.

10. Drive system according to one of the claims 1 to 9,
the rotor hollow shaft (23) being non-rotatably connected at an end side of the motor or generator unit (2) facing away from the transmission unit (1), to a brake disk (234) of a braking device.

11. Drive system according to claim 10,
the stub shaft (233) being connected, at an end side of the motor or generator unit (2) facing away from the transmission unit (1), to a disk-shaped flange which is connected by elastic bolts to the brake disk (234).

12. Drive system according to one of the claims 1 to 9,
the second shaft (16) of the transmission unit (1) being non-rotatably connected to a brake disk of a braking device.

13. Drive system according to claim 12,
the brake disk (234) being connected by means of a keyed or clamping connection to the second shaft (16) and the keyed or clamping connection being axially aligned with a short toothed coupling between the second shaft (16) and the sun wheel shaft (162).

14. Drive system according to one of the claims 1 to 13, the second shaft (16) of the transmission unit (1) being mounted by means of a double-row mounting (161) in an X arrangement.

15. Drive system according to one of the claims 1 to 14,
the bearing seating for first bearing (231) of the rotor hollow shaft (23) being formed by a housing cover facing toward the transmission unit (1) on a first motor or generator end side and the bearing seat for the second bearing (232) of the rotor hollow shaft (23) being formed by a housing cover facing away from the transmission unit (1) at a second motor or generator end side.

16. Drive system according to one of the claims 1 to 15,
the rotor hollow shaft (23) being axially separated from the second shaft (16) of the transmission unit (1) or being axially adjacent thereto.

17. Drive system according to one of the claims 1 to 16,
the transmission housing connecting piece (152) concentrically surrounding a motor-side or generator-side end section of the sun wheel shaft (162).

18. Drive system according to one of the claims 1 to 17,
the first shaft of the transmission unit comprising a coupling flange (14) which can be elastically connected to the driven machine shaft or rotor shaft, and a transmission housing (15) having a cardanic peripherally symmetrical or partially symmetrical mounting (13) for connecting to a supporting structural element (7) of the wind turbine.

19. Drive system according to claim 18,
the cardanic mounting being formed by a ring-shaped mount (13) radially surrounding the whole periphery of the transmission housing (15), said mount having a plurality of bores (131) arranged in the peripheral direction substantially equidistantly, into which elastic bolts are inserted and which can be connected with a corresponding torque mount to the supporting structural element (7) of the wind turbine.

20. Drive system according to claim 19,
the corresponding torque mount comprising a ring element with bores arranged substantially equidistantly in the peripheral direction into which the elastic bolts can be inserted.

21. Drive system according to claim 20,
the corresponding torque mount having two symmetrically or asymmetrically formed mounting arms (71, 72) which are each connected by an end section into a receptacle (73, 74) on the supporting structural element (7) and there are connected thereto.

22. Drive system according to claim 18,
the cardanic mounting being formed by two ring-shaped mounts (13a, 13b) radially surrounding part of the periphery of the transmission housing, said mounts having a plurality of bores (131) arranged in the peripheral direction substantially equidistantly, into which elastic bolts are inserted and which can be connected with a corresponding torque mount to the supporting structural element (7) of the wind turbine.

23. Drive system according to claim 22,
the corresponding torque mounts each comprising a ring segment (13a, 13b) with bores (131) arranged in the peripheral direction substantially equidistantly, into which the elastic bolts can be inserted.

24. Drive system according to claim 23,
the corresponding torque mounts each comprising a mounting arm (71a, 72a) which is insertable with an end section into a receptacle (73, 74) on the supporting structural element (7), said mounting arms there being connectable thereto.

25. Drive system according to one of the claims 19 to 24,
the elastic bolts of the cardanic mounting being axially removable elastomer bolts, and the coupling flange having a plurality of bores arranged in the peripheral direction substantially equidistantly, into which the axially removable elastic bolts can be inserted and connected to a corresponding driven machine or rotor shaft coupling flange.

26. Drive system according to claim 25,
wherein, with the elastomer bolts of the cardanic mounting and of the coupling flange removed, a radial assembly or disassembly direction of the drive system is made free in relation to a shaft arrangement of the transmission unit.

27. Drive system according to one of the claims 18 to 26, wherein additional assemblies of the transmission unit are mounted directly onto the supporting structural element of the wind turbine and via the cardanic mounting and an elastic coupling between the driven machine shaft or the rotor shaft and the first shaft of the transmission unit are decoupled from the transmission housing.

28. Drive system according to one of the claims 18 to 27, wherein the transmission unit (1) comprises a first (115) and a second main bearing (116) by means of which the first shaft of the transmission unit is mounted and which are arranged between the planet support and the transmission housing (15).

29. Drive system according to one of the claims 18 to 28,
the transmission unit (1) comprising a first (11) and a second planetary gear stage (12) in a coaxial arrangement.

30. Drive system according to one of the claims 1 to 29,
a motor-side or generator-side bearing of the transmission unit being configured electrically isolated.

31. Drive system according to one of the claims 1 to 30,
the transmission unit being connected to a generator unit and the first shaft of the transmission unit being a transmission-side drive shaft and the second shaft of the generator unit being a transmission-side output shaft and the coupling flange of the transmission-side drive shaft being connectable to a rotor shaft.

## Revendications

1. Système d'entraînement pour une éolienne comprenant
- au moins un groupe (1) de transmission, comprenant un étage (11, 12 ) de roue satellite, qui a une couronne ( 114, 124 ), plusieurs roues ( 113, 123 ) satellites, une cage ( 112, 122 ) et une roue ( 111, 121 ) solaire,
- un premier arbre qui est associé au groupe ( 1 ) de transmission, qui a une bride ( 14 ) d'accouplement pouvant être reliée à une machine produisant du travail ou à un arbre de rotor et qui est monté par l'intermédiaire de la cage ( 112 ),
- un groupe ( 2 ) de moteur ou de génératrice relié au groupe
( 1 ) de transmission,
- un deuxième arbre ( 16 ), qui est associé au groupe ( 1 ) de transmission, qui est conformé en arbre creux, qui, par son tronçon d'extrémité du côté de la transmission, entoure concentriquement un tronçon d'extrémité du côté du moteur ou de la génératrice d'un arbre ( 162 ) de roue solaire et qui là en est solidaire en rotation,
- un rotor ( 22 ), solidaire en rotation de l'arbre ( 23 ) creux du rotor du groupe ( 2 ) de moteur ou de génératrice,
- un arbre ( 233 ) à emmanchement, qui est solidaire en rotation de l'arbre ( 23 ) creux du rotor, qui, par son tronçon d'extrémité du côté de la transmission, est entouré concentriquement du deuxième arbre ( 16 ) du groupe ( 1 ) de transmission et qui là en est solidaire en rotation,
- un appui ( 152 ) de carter de transmission, qui est disposé entre le groupe ( 1 ) de transmission et le groupe ( 2 ) moteur ou de génératrice, qui entoure concentriquement le deuxième arbre ( 16 ) du groupe ( 1 ) de transmission et qui forme un siège de palier pour un agencement ( 161 ) de palier, qui est associé au deuxième arbre ( 16 ) et au moyen duquel l'arbre ( 162 ) de roue solaire est monté également,
- deux couvercles de carter, qui sont disposés respectivement sur un côté frontal du moteur ou de la génératrice et qui forment les sièges pour un premier ( 231 ) et un deuxième paliers ( 232 ) de l'arbre ( 23 ) creux du rotor.

2. Système d'entraînement suivant la revendication 1,
dans lequel le deuxième arbre ( 16 ) du groupe ( 1 ) de transmission est relié à l'arbre ( 162 ) de la roue solaire, par un accouplement ou par une liaison par clavette, disposé à l'intérieur du deuxième arbre ( 16 ).

3. Système d'entraînement suivant la revendication 2,
dans lequel le deuxième arbre ( 16 ) du groupe ( 1 ) de transmission est relié à l'arbre ( 162 ) de la roue solaire au moyen d'une denture courte, d'une denture hypoïde, d'une liaison polygonale, d'une liaison par clavette, d'un accouplement à broche élastique ou d'une liaison à serrage intérieur.

4. Système d'entraînement suivant l'une des revendications 1 à 3,
dans lequel le deuxième arbre ( 16 ) du groupe ( 1 ) de transmission est relié à l'arbre ( 233 ) à emmanchement par un accouplement ou par une liaison de serrage, disposé à l'intérieur du deuxième arbre ( 16 ).

5. Système d'entraînement suivant la revendication 4,
dans lequel le deuxième arbre ( 16 ) du groupe ( 1 ) de transmission est relié à l'arbre ( 233 ) à emmanchement au moyen d'une denture courte, d'une denture hypoïde, d'une liaison polygonale, d'une liaison par clavette, d'un accouplement à broche élastique ou d'une liaison à serrage intérieur.

6. Système d'entraînement suivant l'une des revendications 1 à 5,
dans lequel l'arbre ( 23 ) creux du rotor est relié à l'arbre ( 233 ) à emmanchement à une extrémité, du côté de la transmission de l'arbre ( 23 ) creux du rotor, par un accouplement ou par une liaison de serrage, disposé à l'intérieur de l'arbre ( 23 ) creux du rotor.

7. Système d'entraînement suivant la revendication 6,
dans lequel l'arbre ( 23 ) creux du rotor est relié à l'arbre ( 233 ) à emmanchement au moyen d'une denture courte, d'une denture hypoïde, d'une liaison polygonale, d'une liaison par clavette, d'un accouplement à broche élastique ou d'une liaison à serrage intérieur.

8. Système d'entraînement suivant l'une des revendications 1 à 5,
dans lequel l'arbre ( 233 ) à emmanchement s'étend axialement complètement sur l'arbre ( 23 ) creux du rotor et, à un côté frontal, éloigné du groupe ( 1 ) de transmission, du groupe ( 2 ) moteur ou de génératrice, est relié à l'arbre creux du rotor au moyen d'un accouplement ou d'une liaison de serrage.

9. Système d'entraînement suivant la revendication 8,
dans lequel l'arbre ( 23 ) creux du rotor est relié à l'arbre ( 233 ) à emmanchement au moyen d'une denture courte, d'une denture hypoïde, d'une liaison polygonale, d'une liaison par clavette, d'un accouplement à broche élastique ou d'une liaison à serrage intérieur ou extérieur.

10. Système d'entraînement suivant l'une des revendications 1 à 9,
dans lequel l'arbre ( 23 ) creux du rotor est sur un côté frontal, éloigné du groupe ( 1 ) de transmission, du groupe
( 2 ) moteur ou de génératrice, solidaire en rotation d'un disque ( 234 ) de frein d'un dispositif de freinage.

11. Système d'entraînement suivant la revendication 10,
dans lequel l'arbre ( 233 ) à emmanchement est sur un côté frontal, éloigné du groupe ( 1 ) de transmission, du groupe ( 2 ) moteur ou de génératrice, relié à une bride conformée en disque, qui est reliée au disque ( 234 ) de frein au moyen d'un boulon élastique.

12. Système d'entraînement suivant l'une des revendications 1 à 9,
dans lequel le deuxième arbre ( 16 ) du groupe ( 1 ) de transmission est solidaire en rotation d'un disque de frein d'un dispositif de freinage.

13. Système d'entraînement suivant la revendication 12,
dans lequel le disque ( 234 ) de frein est relié au deuxième arbre ( 16 ) au moyen d'une liaison à clavette et dans lequel la liaison à clavette est orientée axialement sur un accouplement à denture courte entre le deuxième arbre ( 16 ) et l'arbre ( 162 ) de la roue solaire.

14. Système d'entraînement suivant l'une des revendications 1 à 13,
dans lequel le deuxième arbre ( 16 ) du groupe ( 1 ) de transmission est monté suivant un agencement en X au moyen d'un agencement ( 161 ) de paliers à double rangées.

15. Système d'entraînement suivant l'une des revendications 1 à 14,
dans lequel le siège du premier palier ( 231 ) de l'arbre ( 23 ) creux du rotor est formé sur un premier côté frontal du moteur ou de la génératrice par un couvercle de carter, tourné vers le groupe ( 1 ) de transmission et dans lequel le siège du deuxième palier ( 232 ) de l'arbre ( 23 ) creux du rotor est formé sur un deuxième côté frontal du moteur ou de la génératrice par un couvercle de carter éloigné du groupe ( 1 ) de transmission.

16. Système d'entraînement suivant l'une des revendications 1 à 15,
dans lequel l'arbre ( 23 ) creux du rotor est à distance axialement du deuxième arbre ( 16 ) du groupe ( 1 ) de transmission ou s'y raccorde axialement.

17. Système d'entraînement suivant l'une des revendications 1 à 16,
dans lequel l'appui ( 152 ) du carter de transmission entoure concentriquement un tronçon d'extrémité, du côté du moteur ou de la génératrice, de l'arbre ( 162 ) de la roue solaire.

18. Système d'entraînement suivant l'une des revendications 1 à 17,
dans lequel le premier arbre du groupe de transmission a une bride ( 14 ) d'accouplement pouvant être reliée élastiquement à l'arbre de la machine produisant du travail ou à l'arbre du rotor et dans lequel un carter ( 15 ) de transmission a, pour la liaison avec un élément ( 7 ) porteur de la structure de l'éolienne, une suspension ( 13 ) à la cardan, symétrique sur le pourtour ou en partie symétrique.

19. Système d'entraînement suivant la revendication 18,
dans lequel la suspension à la cardan est formée par un appui ( 13 ) annulaire entourant radialement complètement le carter ( 15 ) de transmission et ayant, dans la direction périphérique, plusieurs trous ( 131 ) sensiblement équidistants, dans lesquels sont insérés les boulons élastiques, qui peuvent être reliés à un appui de couple de rotation correspondant sur l'élément ( 7 ) porteur de structure de l'éolienne.

20. Système d'entraînement suivant la revendication 19,
dans lequel l'appui de couple de rotation correspondant comprend un élément annulaire ayant des trous sensiblement équidistants dans la direction périphérique, dans lesquels les boulons élastiques peuvent être insérés.

21. Système d'entraînement suivant la revendication 20,
dans lequel l'appui de couple de rotation correspondant comprend deux bras ( 71, 72 ) d'appui symétriques ou dissymétriques, qui peuvent respectivement, par un tronçon d'extrémité, être insérés dans un logement ( 73, 74 ) de l'élément ( 7 ) porteur de structure et y être reliés à celui-ci.

22. Système d'entraînement suivant la revendication 18,
dans lequel la suspension à la cardan est formée par deux appuis ( 13a, 13b ) en segment annulaire, entourant radialement sur une partie du pourtour le carter de la transmission et ayant respectivement plusieurs trous ( 131 ) sensiblement équidistants dans la direction périphérique, dans lesquels sont insérés les boulons élastiques, qui peuvent être reliés à des appuis de couple de rotation correspondant sur l'élément ( 7 ) porteur de structure de l'éolienne.

23. Système d'entraînement suivant la revendication 22,
dans lequel les appuis de couple de rotation correspondant comprennent respectivement un segment ( 13a, 13b ) annulaire ayant des trous ( 131 ) sensiblement équidistants à la direction périphérique, dans lesquels peuvent être insérés les boulons élastiques.

24. Système d'entraînement suivant la revendication 23,
dans lequel les appuis de couple de rotation correspondant comprennent respectivement un bras ( 71a, 72a ) d'appui, qui, par un tronçon d'extrémité, peut être inséré dans un logement ( 73, 74 ) de l'élément ( 7 ) porteur de structure et y être relié à celui-ci.

25. Système d'entraînement suivant l'une des revendications 19 à 24,
dans lequel les boulons élastiques de la suspension à la cardan sont des boulons en élastomère démontables axialement, et dans lequel la bride d'accouplement a dans la direction périphérique plusieurs trous sensiblement équidistants, dans lesquels sont insérés les boulons élastomères démontables axialement, qui peuvent être reliés à une bride correspondante d'accouplement de l'arbre d'une machine produisant du travail ou de l'arbre du rotor.

26. Système d'entraînement suivant la revendication 25,
dans lequel, lorsque les boulons élastomères de la suspension à la cardan et de la bride d'accouplement sont démontés, une direction radiale en ce qui concerne un agencement d'arbres du groupe de transmission de démontage et/ou de montage du système de transmission est libérée.

27. Système d'entraînement suivant l'une des revendications 18 à 26,
dans lequel des ensembles supplémentaires du groupe de transmission sont montés directement sur l'élément porteur de la structure de l'éolienne et sont, par la suspension à la cardan ainsi que par l'accouplement élastique entre l'arbre de la machine produisant du travail ou l'arbre du rotor et le premier arbre du groupe de transmission, découplés du carter de la transmission.

28. Système d'entraînement suivant l'une des revendications 18 à 27,
dans lequel le groupe ( 1 ) de transmission comprend un premier ( 115 ) et un deuxième paliers ( 116 ) principaux, au moyen desquels le premier arbre du groupe de transmission est monté, et qui sont disposés entre des joues de cage et le carter ( 15 ) de transmission.

29. Système d'entraînement suivant l'une des revendications 18 à 28,
dans lequel le groupe ( 1 ) de transmission comprend un premier ( 11 ) et un deuxième étages ( 12 ) de roue satellite dans une forme de construction coaxiale.

30. Système d'entraînement suivant l'une des revendications 1 à 29,
dans lequel un palier du côté moteur ou génératrice du groupe de transmission est réalisé en étant isolé électriquement.

31. Système d'entraînement suivant l'une des revendications 1 à 30,
dans lequel le groupe de transmission est relié à un groupe de génératrice, et dans lequel le premier arbre du groupe de transmission est un arbre menant du côté de la transmission, et dans lequel le deuxième arbre du groupe de génératrice est un arbre mené du côté de la transmission, et dans lequel la bride d'accouplement de l'arbre menant du côté de la transmission peut être reliée à un arbre de rotor.
